# FASCICULE DE BREVET EUROPEEN

(11) **EP 0 539 254 B1**
(45) Date de publication et mention de la délivrance du brevet: **27.12.1995**
(21) Numéro de dépôt: 92402704.8
(22) Date de dépôt: 05.10.1992
(51) Int. Cl.: B31B 1/00, F16D 3/04

(54) **Ligne modulaire de fabrication d'emballages en carton**
Modulare Fabrikationsstrasse für Kartonverpackungen
Modular production line for cardboard boxes

(30) Priorité: 21.10.1991 FR 9112982
(43) Date de publication de la demande: 28.04.1993
(73) Titulaire: RAPIDEX S.M. Société anonyme, F-49000 Angers (FR)
(72) Inventeur: Guiot, Bernard, F-49460 Feneu (FR)
(74) Mandataire: Caunet, Jean

(56) Documents cités:
- EP-A- 0 440 808
- GB-A- 2 141 520
- GB-A- 2 233 066
- US-A- 3 815 380
- US-A- 4 304 501
- Revue CARTIFLEX No. 22 julio-agosto 1991
- Revue CARTIFLEX No. 23 septiembre-octubre 1991
- Mémoire du modèle d'utilité espagnol No. 8 803 174
- Catalogue Bowex de 1987

## Description

La présente invention concerne une ligne modulaire de fabrication d'emballages en carton, en bois, en matière plastique..., tels que des caisses des plateaux, des barquettes ou autres...

De telles lignes sont connues et comportent des modules organisés pour assurer des fonctions spécialisées, par exemple un module margeur, un ou plusieurs modules imprimeurs, au moins un module à refendre et rainer dit slotter et/ou au moins un module découpeur. Ces modules sont déplaçables le long d'éléments de guidage ancrés au sol et sont susceptibles d'être verrouillés les uns contre les autres suivant l'alignement prévu.

Le ou les organes tournants de chaque module concourrant à assurer la fonction du module considéré fait corps avec un engrenage mené disposé en saillie dans celui-ci et en prise avec un engrenage menant disposé en retrait dans le module voisin. Cet engrenage menant est relié, par l'intermédiaire d'une cinématique complexe, au ou aux organes tournants dudit module voisin qui concourrent à assurer la fonction de celui-ci. Ledit engrenage menant du premier module considéré est en prise permanente avec l'engrenage mené de celui-ci.

Le dispositif connu ainsi défini présente des inconvénients majeurs liés à l'engrènement, lequel ne peut être opérationnel valablement que si les engrenages sont parfaitement lubrifiés et amenés en prise avec une précision rigoureuse lors du rapprochement et du verrouillage des modules.

Or, les engrenages doivent, pour être en prise, sortir de leurs carters et il est alors inévitable que du lubrifiant s'égoutte notamment de l'engrenage mené qui fait saillie. Quels que soient les moyens d'étanchéité mis en oeuvre, du lubrifiant s'échappe et souille les modules et le sol, parfois les cartons et les organes tournants qui les sollicitent et les traitent.

Par ailleurs, l'engrènement n'est jamais partait car il dépend en particulier du bon appui des modules les uns contre les autres, de la coïncidence de leurs hauteurs respectives, de la propreté des moyens de guidage au sol qui peuvent être encrassés par le lubrifiant, les poussières, les déchets de carton, etc... Dans ces conditions, il peut en résulter une détérioration des dentures, un jeu d'engrènement préjudiciable à la bonne exécution de chaque opération de traitement ainsi qu'à la précision et à l'enchaînement des traitements successifs de la ligne.

Enfin, ces modules connus sont bruyants et constituent une nuisance pour les opérateurs.

Le brevet anglais n^{·} 2 233 066 décrit une machine de ce type mais à laquelle des perfectionnements ont été apportés. En particulier, les chaînes cinématiques transmettant le mouvement de rotation d'un module au suivant ne procèdent plus par engrènement mais sont remplacées par des tronçons d'arbre normalement alignés parallèlement à la direction de rapprochement ou d'éloignement des modules. Les engrenages menant et mené de chaque module sont supprimés et remplacés par un accouplement du type crabot, lequel comporte une denture mâle fixée à un tronçon d'arbre et une denture femelle reliée par l'intermédiaire d'une cannelure au tronçon d'arbre voisin.

Pour être certain que la relation angulaire des arbres entre eux est conservée lors de l'éloignement et du rapprochement des modules, les dentures de chaque accouplement sont "détrompées" par une variation du pas et de la largeur des dents, telle que l'engrènement desdites dentures ne puisse s'établir que pour un seul calage angulaire relatif. En outre, un ressort est prévu entre la denture femelle et le tronçon d'arbre cannelé correspondant. Dès lors, pour assurer l'accouplement des tronçons d'arbre de deux modules voisins, il faut établir le contact facial entre les dentures et poursuivre la pression du module mobile sur le module fixe, alors que le tronçon d'arbre à denture femelle tourne lentement ; puis, lorsque les deux dentures sont parfaitement en regard l'une de l'autre, le ressort provoque l'enclenchement de celles-ci.

Ce type d'accouplement présente l'inconvénient de nécessiter la mise en rotation à vitesse lente de l'arbre menant pour assurer l'enclenchement du crabot correspondant. Par conséquent, le rapprochement de tous les modules s'accompagne de nombreuses rotations de l'arbre menant, ce qui implique que cette opération doit être effectuée lorsque la ligne est vide de tous cartons, sinon la desynchronisation des tronçons d'arbre entraînerait inévitablement un "bourrage".

Par ailleurs, chaque modèle contient la même pignonnerie que dans les modules connus, à la seule différence près que l'entraînement de cette pignonnerie à partir du tronçon d'arbre correspondant est effectué par un couple de pignons coniques. Dans ces conditions, les mêmes inconvénients que ceux évoqués ci-dessus à propos des modules connus se retrouvent ; fuites de lubrifiant, bruit, jeux et usure ...

La présente invention a pour but de remédier à tous ces inconvénients des machines connues précitées, en particulier en supprimant tous les moyens de lubrification (pompe, canalisation, carter...) et les risques de fuites de lubrifiant, en assurant une transmission de mouvement d'un module au suivant d'une extrême précision avec une mise en place de l'accouplement automatique, sûre, fiable et sans risque de décalage angulaire entre les modules et en atténuant considérablement le bruit.

Dans l'invention et comme cela est connu, chaque module contient une cinématique pour l'entraînement d'organes rotatifs qui assurent sa fonction, chaque module étant guidé en translation le long de rails parallèles à l'axe géométrique de la ligne et étant susceptible d'être rapproché ou éloigné de celui qui le précède, chaque module étant également muni à ses extrémités et de chaque côté des parties conjuguées d'un dispositif de verrouillage susceptibles de coopérer chacune avec celle conjuguée du module voisin, la cinématique de chaque module comportant un troncon d'arbre s'étendant parallèlement à l'axe géométrique de la ligne et pourvu à ses extrémités des parties conjuguées d'un dispositif d'accouplement dont la mise en ou hors service procède par translation parallèlement audit axe géométrique, et le tronçon d'arbre du module de tête de la ligne étant accouplé à un dispositif d'entraînement en rotation.

Dans le but précité et conformément à l'invention, le tronçon d'arbre de tête du module menant coopère avec un dispositif d'indexage automatique pilote destiné à arrêter toute la cinématique du module considéré dans une position prédéterminée de son cycle à laquelle correspond une position angulaire d'indexage de ce tronçon d'arbre, tandis que les tronçons d'arbre suivants des modules menés coopèrent chacun avec un dispositif d'indexage piloté recevant l'ordre d'indexation du dispositif d'indexage pilote pour arrêter lesdits tronçons d'arbre dans la même position angulaire d'indexage que le tronçon d'arbre pilote alors que les cinématiques de ces modules menés sont toutes arrêtées par la ligne d'arbre dans la même position prédéterminée du cycle que la cinématique du module menant.

Suivant une forme de réalisation particulièrement avantageuse, le dispositif d'indexage pilote comporte d'une part, une partie tournante ou cible qui est reliée à la cinématique du module de tête pour tourner d'un tour lorsqu'un cycle complet de celui-ci est accompli, et d'autre part, un lecteur fixe tel que celui d'un résolveur, d'un contact électrique, d'une cellule photoélectrique, d'un détecteur de proximité relié au dispositif d'entraînement en rotation et aux dispositifs d'indexage pilotés pour les arrêter. Le dispositif d'indexage piloté comporte un disque calé sur le tronçon d'arbre correspondant et présentant un cran susceptible de coopérer avec un doigt mobile mû par un vérin relié au lecteur du dispositif. d'indexage pilote.

Par ailleurs, chacun des tronçons d'arbre est relié par un dispositif à au moins une courroie crantée aux organes rotatifs précités qui assurent la fonction du module correspondant.

En outre, que chaque tronçon d'arbre coopère directement avec un renvoi d'angle à pignons conjugués ou avec une courroie crantée, au moins une courroie crantée peut relier entre eux les organes rotatifs précités qui assurent la fonction du module correspondant.

De toute façon, l'un au moins des dispositifs d'accouplement peut être un joint d'Oldham comprenant deux plateaux extrêmes et un plateau intermédiaire entre lesquels l'accouplement est réalisé par deux jeux d'une languette et d'une rainure diamétrales conjuguées, respectivement orthogonaux l'un à l'autre ; le plateau intermédiaire est prisonnier axialement de l'extrémité libre du tronçon d'arbre sur lequel est fixé l'un des plateaux extrêmes, est monté flottant radialement dans toutes les directions autour de cette extrémité et est centré élastiquement sur celle-ci.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin :
- les figures 1 et 2 sont des perspectives schématiques se prolongeant l'une, l'autre et illustrant une forme de réalisation d'une ligne modulaire conforme à l'invention,
- la figure 3 est une perspective montrant une première forme de réalisation de l'un des dispositifs d'accouplement,
- la figure 4 est une coupe prise à plus grande échelle suivant la ligne IV-IV de la figure 3,
- la figure 5 est une vue analogue à la figure 4, montrant une deuxième forme de réalisation d'un dispositif d'accouplement.

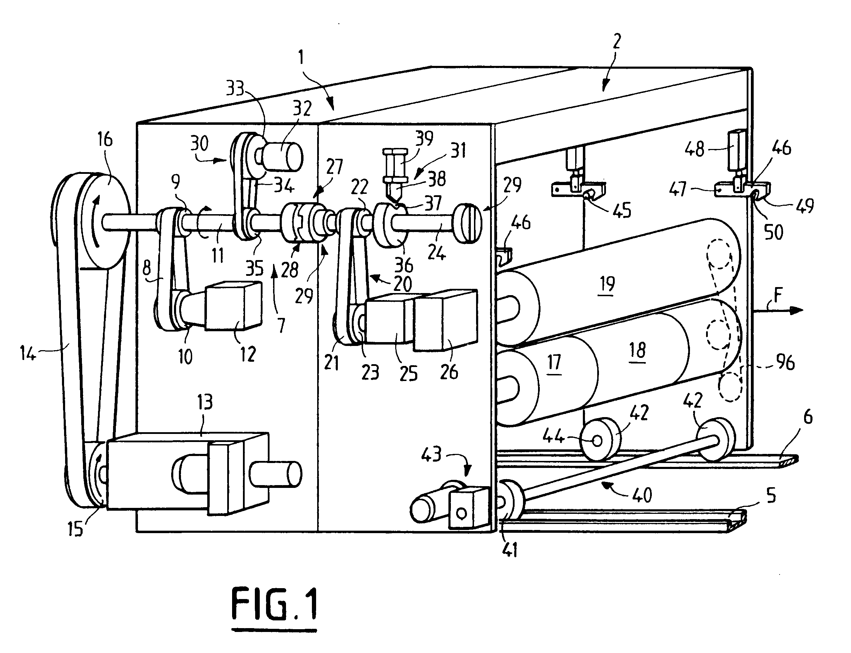

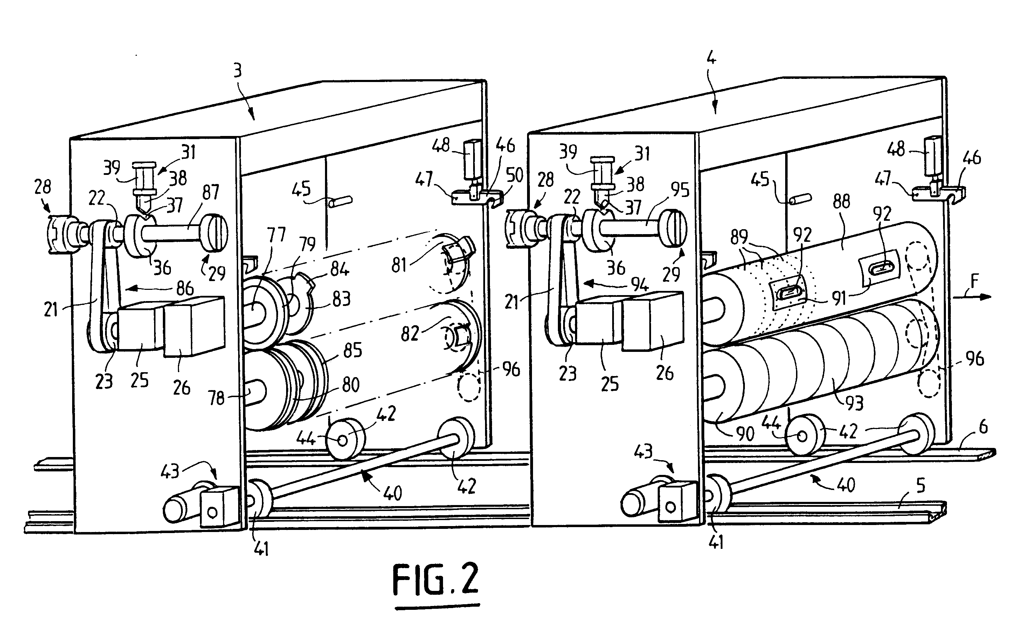

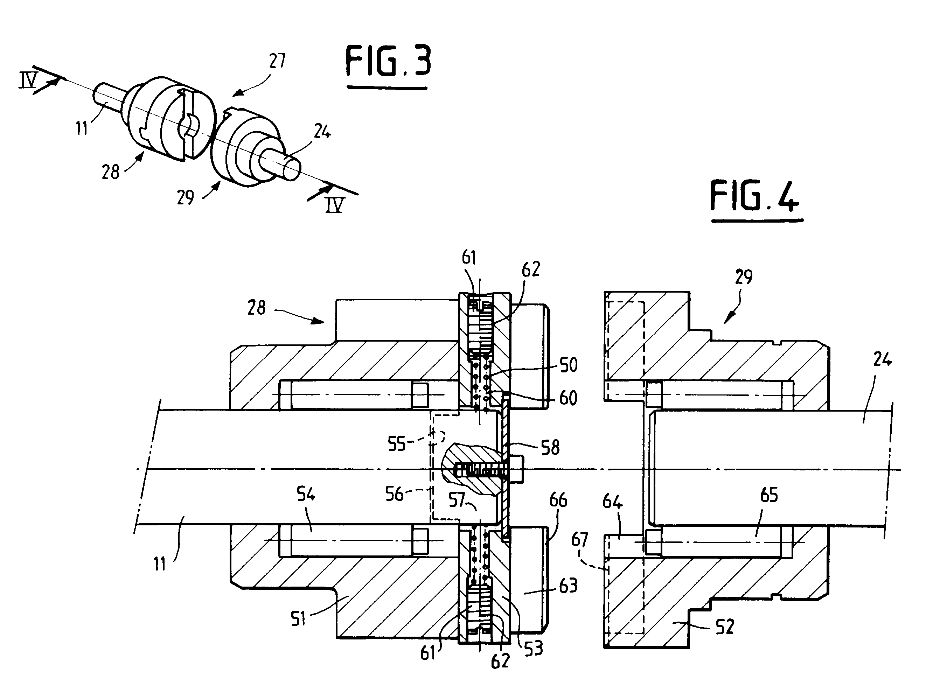

Ainsi que cela ressort des figures 1 et 2, la ligne modulaire de fabrication d'emballages en carton comporte des modules 1 à 4 déplaçables en translation le long de rails 5, 6 et susceptibles d'être sélectivement accolés ou éloignés.

Dans l'exemple représenté, la ligne comprend en tête un module margeur 1 dont les organes rotatifs permettant de distribuer chaque ébauche de flan, non représentée, au poste suivant et de la positionner pour que les opérations successives soient appliquées aux bons endroits.

Ces organes sont mûs par une cinématique interne, laquelle est entraînée par une transmission 7 comprenant une courroie crantée sans fin 8 circulant sur une poulie menante 9 et sur une poulie menée 10 faisant corps respectivement avec un tronçon d'arbre 11 et un renvoi d'angle 12.

Le tronçon d'arbre 11 s'étend parallèlement aux rails 5 et 6, par conséquent à la direction d'avancement ou d'éloignement F des modules 2 à 4. Il est supporté par des paliers non représentés.

A son extrémité libre, le tronçon d'arbre 11 est relié cinématiquement à un groupe motoréducteur 13, par exemple au moyen d'une transmission à courroie 14 enroulée sur deux poulies 15 et 16 calées respectivement sur l'arbre de sortie du groupe 13 et sur le tronçon d'arbre 11.

Dans le même exemple illustré par le dessin, la ligne comprend ensuite un module imprimeur 2 dans lequel sont montés tournants notamment un cylindre porte-cliché 17 muni d'un cliché 18, un cylindre porte-blanchet 19 et divers autres cylindres. Tous ces cylindres sont mûs par une cinématique interne faisant application de courroies crantées pour éviter le bruit et la lubrification. Cette cinématique est entraînée par une transmission 20 comprenant une courroie crantée sans fin 21 circulant sur une poulie menante 22 et une poulie menée 23 faisant corps respectivement avec un tronçon d'arbre 24 et un différentiel de calage 25 accouplé à un renvoi d'angle 26.

Le tronçon d'arbre 24 est aligné avec celui 11 du module 1 et est supporté par des paliers non représentés. Ces deux tronçons d'arbre 11 et 24 sont reliés l'un à l'autre par un dispositif d'accouplement 27 dont les parties conjuguées 28 et 29 (figures 1 et 3) sont dissociables pour permettre l'écartement des modules 1 et 2, ces parties conjuguées étant organisées pour se centrer automatiquement et se réunir lors du rapprochement desdits modules.

Pour identifier un point spécifique, par exemple le point de départ, de chacun des cycles répétitifs de fonctionnement de la ligne, point auquel correspond un calage angulaire particulier du tronçon d'arbre de tête 11, un dispositif d'indexage automatique pilote 30 est prévu dans la cinématique du module de tête 1.

Par ailleurs, pour arrêter le tronçon d'arbre suivant 24 du module 2 avec le même calage angulaire que le tronçon d'arbre de tête 11, alors que les cinématiques des deux modules 1 et 2 sont arrêtés dans la même position prédéterminée du cycle, un dispositif d'indexage piloté 31 est prévu dans la cinématique du module mené 2.

Grâce à ces dispositifs d'indexage pilote 30 et piloté 31, il est certain que les tronçons d'arbre seront arrêtés au même calage angulaire dans la même zone du cycle. Autrement dit, si un cycle représente six tours des tronçons d'arbre 11 et 24, les dispositifs d'indexage 30 et 31 permettront l'arrêt des cinématiques au point zéro du premier secteur des six secteurs du cycle.

Bien entendu, chaque cycle peut correspondre à un seul tour de la ligne d'arbre ou à un nombre quelconque, entier ou non, de tours.

Le dispositif d'indexage pilote de tête 30 peut être constitué par un résolveur, un contract électrique, une cellule photoélectrique, un détecteur de proximité ou autre...La partie tournante 32 de ce dispositif pilote est entraînée par une poulie menée 33 reliée par une courroie crantée sans fin 34 à une poulie menante 35 calée sur le tronçon d'arbre 11. Le rapport de réduction des poulies 33 et 35 est le même que celui de la transmission 8 à 10 et 20 entre le tronçon d'arbre 11 et l'organe mené du margeur logé dans le module 1, de sorte que la partie tournante 32 du dispositif d'indexage pilote défile devant le lecteur fixe de celui-ci, non représenté, à la même vitesse que le cycle de fonctionnement du module 1.

Le dispositif d'indexage piloté 31 du module 2 peut être de n'importe quel type du moment qu'il arrête le tronçon d'arbre 24 dès qu'il reçoit le signal d'arrêt délivré par le lecteur fixe du dispositif d'indexage pilote 30, signal qui est généralement dirigé vers le groupe motoréducteur 13 pour l'immobiliser ainsi que la ligne de tronçons d'arbre 11, 24 auxquels il est accouplé.

Dans l'exemple représenté, le dispositif d'indexage piloté 31 est du type mécanique à commande pneumatique ou autre. Il comporte un disque 36 calé sur le tronçon d'arbre 24 et présentant un cran en V 37 susceptible de coopéer avec un doigt mobile 38 mû par un vérin pneumatique 39. L'alimentation du vérin est gérée, comme le freinage du groupe 13 et l'interruption des autres fonctions de la ligne, par un microordinateur pour repousser le doigt 38 dans le cran 37. Cet indexage mécanique à commande pneumatique est opérant lors de la séparation des modules.

Comme indiqué dans ce qui précède, le dispositif d'indexage piloté 31 peut être d'un autre type. En particulier, il peut être constitué par un frein électromécanique commandé par le lecteur du dispositif d'indexage pilote.

De toute façon, les dispositifs d'indexage 30 et 31 maintiennent, durant notamment la séparation des modules 1, 2, les tronçons d'arbre 11, 24 immobilisés au même calage angulaire pour la même position du cycle. Dès lors, il est possible d'arrêter la ligne, sans la vider des cartons en cours de fabrication, pour séparer les modules, puis les rapprocher. Il est en outre possible d'intercaler un module sans perturber le cycle.

Pour le déplacement du module 2, celui-ci comporte un essieu 40 faisant corps avec deux roues 41 et 42. La roue 41 est guidée par le rail 5 qui dans cet exemple est profilé en U, tandis que la roue 42 repose sur le rail 6 qui dès lors est un méplat formant chemin de roulement. L'essieu 40 est entraîné par un groupe motoréducteur 43 fixé sur le module 2. Deux autres roues 41 et 42 sont montées folles autour d'axes 44, disposées devant l'essieu 40 et guidées le long des rails 5 et 6.

Si les rails sont positionnés au sol avec précision, le module 2 reposant sur ceux-ci par ses quatre roues 41 et 42 est rigoureusement vertical et s'applique avec précision contre le module 1. Il s'agit alors de fixer automatiquement et fermement lesdits modules entre eux.

A cet effet, chacun des modules 1 et 2 est muni de chaque côté et à ses deux extrémités respectivement des deux parties conjuguées d'un dispositif de verrouillage. Dans l'exemple représenté, la partie conjuguée avant est constituée par un doigt fixe 45 et la partie conjuguée arrière par un crochet 46 monté pivotant autour d'un axe fixe 47 et mû par un vérin 48. Le crochet 46 présente une rampe inclinée 49 d'accès à un cran de verrouillage 50, rampe qui provoque, lorsque le module 2 se rapproche du module 1 et que son doigt 45 rencontre la rampe 49 du crochet 46 du module 1, le soulèvement de ce crochet dont le cran 50 se verrouille sur ledit doigt. Dans ces conditions, les crochets du module antérieur se verrouillent sur les doigts du module postérieur et assurent la fixation desdits modules entre eux.

Lors de verrouillage, les parties conjuguées 28 et 29 du dispositif d'accouplement 27 appartenant respectivement aux tronçons d'arbre 11 et 24 des modules 1 et 2, s'enclenchent mutuellement sans qu'il soit nécessaire de générer la rotation d'un tronçon d'arbre relativement à l'autre. Cet enclenchement se réalise facilement dès lors, d'une part, que les dispositifs d'indexage 30 et 31 placent les tronçons d'arbre 11 et 24 dans la même position angulaire, d'autre part, que les guidages et verrouillages sont très précis,surtout que les parties conjuguées 28 et 29 se centrent et s'enclenchent automatiquement relativement l'une à l'autre en rattrapant les écarts de positionnement, certes faibles, mais inévitables.

Des formes de réalisation d'un dispositif d'accouplement 27 sont décrites dans ce qui suit de façon que leur mise en ou hors service procède par translation parallèlement à l'axe géométtrique de la ligne modulaire.

Suivant la première forme de réalisation illustrée par les figures 3 et 4, le dispositif d'accouplement est un joint d'Oldham comprenant deux plateaux extrêmes 51, 52 et un plateau intermédiaire 53.

Dans l'exemple représenté, le plateau 51 est accouplé, par l'intermédiaire d'un manchon expansible 54, avec le tronçon d'arbre menant 11. Il délimite une rainure diamétrale 55 dans laquelle est emboîtée de façon coulissante une languette 56 du plateau intermédiaire 53. Celui-ci présente un alésage 57 enfilé avec un jeu important sur l'extrémité libre du tronçon d'arbre 11 contre laquelle est fixée une rondelle 58 appliquée à glissement doux contre le plateau intermédiaire 53.

Par ailleurs, quatre ressorts 59 sont logés dans des trous 60 dudit plateau intermédiaire 53 et interposés entre l'extrémité libre du tronçon d'arbre 11 et des bouchons 61 vissés dans des débouchures taraudées 62 desdits trous 60.

Ainsi, le plateau intermédiaire 53 est monté flottant radialement dans toutes les directions autour du tronçon d'arbre 11 et centré élastiquement relativement à celui-ci.

La face libre du plateau intermédiaire 53 délimite une rainure diamétrale 63 dans laquelle est susceptible de s'emboîter de façon coulissante une languette 64 que présente en saillie l'autre plateau extrême 52. La rainure 63 est orthogonale à la languette 56.

Le plateau 52 est accouplé, par l'intermédiaire d'un manchon expansible 65, sur l'extrémité libre du tronçon d'arbre mené 24. Lorsque les tronçons d'arbre 11 et 24 sont alignés, en rapprochant le module 2 du module 1 (donc la partie conjuguée 29 de la partie conjuguée 28), le plateau intermédiaire 53 se centre automatiquement sur le plateau mené 52 (grâce à la coopération de chanfreins 66 et 67 bordant les rainures 63 et la languette 64) et lesdits plateaux s'accouplent par engagement de ladite languette 64 dans ladite rainure 63.

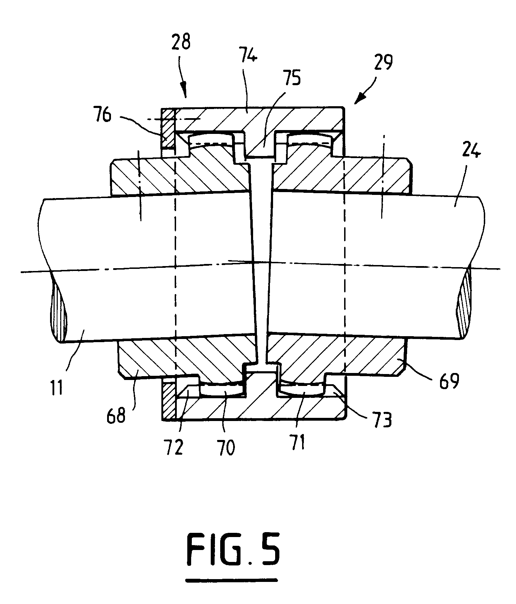

Suivant la deuxième forme de réalisation illustrée par la figure 5, le dispositif d'accouplement comporte deux manchons 68 et 69 accouplés, par tout moyen approprié, aux tronçons d'arbre 11 et 24. Ces manchons présentent des dentures extérieures bombées 70 et 71 destinées à engrener avec des dentures intérieures 72 et 73 qui leur sont conjuguées. Ces dentures intérieures sont taillées, formées ou moulées dans une bague 74 de part et d'autre d'une cloison annulaire 75 de celle-ci.

La bague 74 est rendue prisonnière de façon flottante du manchon menant 11 par une rondelle 76 rapportée et fixée en bout de ladite bague et entourant avec un jeu important le manchon 68.

Grâce à la forme bombée des dentures, le centrage et l'emboîtement des parties conjuguées 28 et 29 du dispositif d'accouplement se produit automatiquement et facilement lors du rapprochement des modules 1 et 2, malgré les imperfections inévitables du guidage et de verrouillage.

Une troisième forme de réalisation du dispositif d'accouplement n'est pas représentée mais décrite succinctement dans ce qui suit. Il s'agit d'un embrayage électromagnétique dont un premier plateau contenant une bobine d'excitation reliée à un collecteur, est fixé sur un tronçon d'arbre, tandis qu'un deuxième plateau susceptible de fermer le champ magnétique est fixé sur l'autre tronçon d'arbre, le collecteur étant branché sur un dispositif d'alimentation électrique commandé par le lecteur fixe du dispositif d'indexage pilote 30. Le premier plateau fait corps avec un cône de centrage susceptible de coopérer avec une douille conique guidée dans le deuxième plateau et repoussée par un ressort. La douille et le cône sont positionnés pour assurer le centrage avant que les plateaux soient trop rapprochés.

D'autres modules peuvent être associés aux précédents 1 et 2.

Dans l'exemple illustré par le dessin, la ligne comprend, en aval du module imprimeur 2, un module à refendre et rainer 3 dénommé habituellement slotter, puis un module de découpe 4.

La figure 2 montre que le slotter 3 comporte deux arbres 77 et 78 portant des outils disposés en regard et intervenant conjointement. Ainsi, l'arbre 77 est équipé à l'une de ses extrémités d'un disque rogneur simple 79 coopérant avec un disque double 80 de l'arbre 78 formant matrice pour couper le carton suivant une ligne droite continue et, à son autre extrémité, d'un disque encocheur coupe-patte 81 coopérant avec un disque matrice 82 pour couper le carton suivant une ligne brisée délimitant une patte. En outre, l'arbre 77 est équipé dans sa partie intermédiaire de trois disques encocheurs 83 dont les secteurs saillants 84 coopèrent avec des disques doubles 85 formant matrices pour couper dans le carton les fentes ou encoches séparant les volets qui forment les côtés de l'emballage à fabriquer.

Outre les arbres à refendre 77 et 78, le module comprend des arbres refouleurs non visibles sur le dessin situés devant les précédents. Ces arbres sont équipés de molettes mâles et femelles formant dans le carton qui défile entre elles des rainages à l'endroit où des plis doivent être constitués.

Tous ces cylindres sont mûs par une cinématique interne, faisant application de courroies crantées 96 pour éviter le bruit et la lubrification. Cette cinématique est entraînée par une transmission 86 identique à la transmission 20 du module 2 et comprenant par conséquent un tronçon d'arbre 87 équipé, à ses extrémités, des parties conjuguées 28 et 29 d'un dispositif d'accouplement 27 et, entre elles, d'un dispositif d'indexage piloté 31. Le module 3 est également équipé des moyens de guidage 40 à 43 et des dispositifs de verrouillage 45 à 48 précités.

La figure 2 montre également que le module de découpe 4 comporte un cylindre porte outils 88 percé de nombreux trous 89 et coopérant avec un cylindre 90. Sur le cylindre 88, sont montées des plaques en bois 91 faisant corps avec des outils de découpe 92 permettant par exemple de découper les poignées de l'emballage. Sur le cylindre 90 sont fixées des plaques 93 en polyuréthane contre lesquelles le tranchant desdits outils porte.

Les cylindres 88 et 90 sont précédés des arbres entraîneurs non visibles sur le dessin.

Ces cylindres et arbres sont mûs par une cinématique interne faisant application de courroies crantées 96 pour éviter le bruit et la lubrification. Cette cinématique est entraînée par une transmission 94 identique à celle 20 du module 2 et comprenant par conséquent un tronçon d'arbre 95 équipé à ses extrémités, des parties conjuguées 28 et 29 d'un dispositif d'accouplement 27 et, entre elles, d'un dispositif d'indexage piloté 31. Le module 4 est également équipé des moyens de guidage 40 à 43 et des dispositifs de verrouillage 45 à 48 précités.

La ligne modulaire illustrée par les figures 1 et 2 comporte quatre modules. Il est bien évident qu'elle peut en comporter moins ou davantage et que certains peuvent être multipliés, comme par exemple le module d'impression 2 si ladite impression est effectuée en plusieurs couleurs.

L'exposé qui précède montre que les cinématiques internes des modules 1 à 4 comportent une ligne de tronçons d'arbre 11, 24, 87 et 95 sur laquelle les courroies crantées 8 et 21 distribuent en parallèle aux organes rotatifs assurant la fonction desdits modules, la puissance fournie, de sorte que les courroies et autres organes de transmission sont moins sollicités que si la puissance était distribuée en série. Il en résulte que la transmission du mouvement est plus précise car il n'y a pas cumul des jeux et en outre, que l'usure se trouve réduite dans une large mesure.

Par ailleurs, l'utilisation généralisée de courroies crantées permet d'annihiler tout glissement et de garantir que la relation angulaire entre organes menant et mené est conservée, ce qui participe à la précision de la fabrication. Il est important de remarquer que la liaison cinématique par courroie crantée des organes rotatifs assurant la fonction des modules est intéressante également dans le cas où la transmision entre chaque tronçon d'arbre et lesdits organes est réalisée par un couple de pignons coniques au lieu d'une courroie crantée.

Par ailleurs, certains modules peuvent être sortis latéralement de la ligne et éventuellement transférés dans une ligne parallèle. A cet effet, chacun des modules concernés est équipé, outre des moyens de guidage longitudinal 40 à 43 coopérant avec les rails 5 et 6, de moyens de guidage transversal, à roues par exemple, susceptibles de circuler sur des rails de dérivation s'étendant perpendiculairement aux rails principaux 5 et 6.

## Revendications

1. Ligne modulaire de fabrication d'emballages en carton, bois, matière plastique ou autre, comprenant des modules de traitement tels qu'un module-margeur (1), un ou des modules imprimeurs (2), un ou des modules à refendre et rainer dit slotter (3), un ou des modules de découpe (4)... chaque module contenant une cinématique pour l'entraînement d'organes rotatifs qui assurent sa fonction, chaque module étant guidé en translation (40) le long de rails (5, 6) parallèles à l'axe géométrique de la ligne et étant susceptible d'être rapproché ou éloigné de celui qui le précède, chaque module étant également muni à ses extrémités et de chaque côté, des parties conjuguées d'un dispositif de verrouillage (45 à 50) susceptibles de coopérer chacune (45) avec celle conjuguée (46 à 50) du module voisin, la cinématique de chaque module comportant un tronçon d'arbre (11, 24, 87, 95) s'étendant parallèlement à l'axe géométrique de la ligne et pourvu à ses extrémités des parties conjuguées (28, 29) d'un dispositif d'accouplement (27) dont la mise en ou hors service procède par translation parallèlement audit axe géométrique, et le tronçon d'arbre (11) du module de tête de la ligne étant accouplé à un dispositif d'entraînement en rotation (13 à 16),
caractérisée en ce que le tronçon d'arbre de tête (11) du module menant (1) coopère avec un dispositif d'indexage automatique pilote (30) destiné à arrêter toute la cinématique du module considéré dans une position prédéterminée de son cycle à laquelle correspond une position angulaire d'indexage de ce tronçon d'arbre,
- en ce que les tronçons d'arbre suivants (24, 87, 95...) des modules menés (2, 3, 4...) coopèrent chacun avec un dispositif d'indexage piloté (31) reçevant l'ordre d'indexation du dispositif d'indexage pilote pour arrêter lesdits tronçons d'arbre dans la même position angulaire d'indexage que le tronçon d'arbre pilote (11) alors que les cinématiques de ces modules menés sont toutes arrêtées par la ligne d'arbre (11, 24, 85, 95...) dans la même position prédéterminée du cycle que la cinématique du module menant.

2. Ligne modulaire selon la revendication 1, caractérisée en ce que le dispositif d'indexage pilote (30) comporte d'une part, une partie tournante ou cible qui est reliée à la cinématique du module de tête pour tourner d'un tour lorsqu'un cycle complet de celui-ci est accompli, et d'autre part, un lecteur fixe tel que celui d'un résolveur, d'un contact électrique, d'une cellule photoélectrique, d'un détecteur de proximité ... relié au dispositif d'entraînement en rotation (13 à 16) et aux dispositifs d'indexage pilotés (31) pour les arrêter.

3. Ligne modulaire selon la revendication 2, caractérisée en ce que le dispositif d'indexage piloté (31) comporte un disque (36) calé sur le tronçon d'arbre correspondant (11, 24, 87, 95) et présentant un cran (37) susceptible de coopérer avec un doigt mobile (38) mû par un vérin (39) relié au lecteur du dispositif d'indexage pilote (30).

4. Ligne modulaire selon l'une quelconque des revendications 1 à 3, caractérisée en ce que chacun des tronçons d'arbre (11, 24, 87, 95) est relié par un dispositif à au moins une courroie crantée (8, 21) aux organes rotatifs précités qui assurent la fonction du module correspondant.

5. Ligne modulaire selon la revendication 4, caractérisée en ce qu'au moins une courroie crantée (8 ; 21) relie chacun des tronçons d'arbre (11, 24, 87, 95) à une boîte de transmission (12 ; 25, 26) accouplée aux organes rotatifs précités qui assurent la fonction du module correspondant.

6. Ligne modulaire selon l'une quelconque des revendications 1 à 5, caractérisée en ce qu'au moins une courroie crantée (96) relie entre eux les organes rotatifs précités qui assurent la fonction du module correspondant.

7. Ligne modulaire selon l'une quelconque des revendications 1 à 3, caractérisée :
- en ce que l'un au moins des dispositifs d'accouplement est un joint d'Oldham (27) comprenant deux plateaux extrêmes (51, 52) et un plateau intermédiaire (53) entre lesquels l'accouplement est réalisé par deux jeux d'une languette (56, 64) et d'une rainure (5, 63) diamétrales conjuguées, respectivement orthogonaux l'un à l'autre.
- et en ce que le plateau intermédiaire (53) est prisonnier axialement (58) de l'extrémité libre du tronçon d'arbre (11) sur lequel est Fixé l'un (51) des plateaux extrêmes, est monté flottant (57) radialement dans toutes les directions autour de cette extrémité et est centré élastiquement (59) sur celle-ci.

8. Ligne modulaire selon la revendication 7, caractérisée en ce que le plateau intermédiaire (53) est centré élastiquement sur l'extrémité libre du tronçon d'arbre correspondant (11) au moyen d'au moins trois ressorts hélicoïdaux (50) logés dans des trous radiaux (60) de ladite extrémité et interposés entre celle-ci et des bouchons (61) vissés dans des débouchures taraudées (62) desdits trous.

9. Ligne modulaire selon la revendication 7 ou 8, caractérisée en ce que le plateau intermédiaire (53) est prisonnier du plateau externe menant (51).

10. Ligne modulaire selon la revendication 9, caractérisée en ce que le plateau intermédiaire (53) comporte une languette (56) d'accouplement avec le plateau menant (51) dont il est prisonnier et délimite une rainure (63) d'accouplement avec le plateau mené (52) dont il peut s'éloigner.

11. Ligne modulaire selon l'une quelconque des revendications 1 à 3, caractérisée en ce que l'un au moins des dispositifs d'accouplement est du type à dentures bombées (70, 71) et comporte deux manchons (68, 69) à dentures extérieures bombées (70, 71) fixés sur deux tronçons d'arbre voisins (11, 24) et une bague (74) à deux dentures intérieures (72, 73), l'une des dentures intérieures (72) étant en prise permanente avec la denture extérieure (70) de l'un des manchons (68) par rapport auquel la bague (74) est prisonnière et montée flottante (75, 76).

12. Ligne modulaire selon la revendication 1, caractérisée en ce que chaque module comporte un essieu menant (40) dont une roue (41) est guidée le long d'un rail profilé en U (5), tandis que l'autre roue (42) roule sur un chemin (6), le module considéré comportant d'autres roues (41, 42) montées folles à distance de celles de l'essieu, autour d'un axe (44).

13. Ligne modulaire selon la revendication 1, caractérisée en ce que chaque dispositif de verrouillage comporte un crochet (46) monté pivotant sur un module autour d'un axe fixe (47) et mû par un vérin (48), le crochet (46) étant susceptible de coopérer avec un doigt fixe (45) monté sur le module contigu.

## Claims

1. Modular production line for making packages of cardboard, wood, plastic or other, comprising treatment modules such as a feeder module (1), one or more printer modules (2), one or more slotter and scorer modules (3), one or more cutter modules (4), ..., each module containing moving parts for driving rotary members that perform the function of the module, each module being guided (40) in translation along rails (5, 6) parallel to the geometrical axis of the line and being suitable for being moved towards or away from the preceding module, each module being also fitted at its ends and on either side with complementary portions of a locking device (45 to 50) each suitable for cooperating (45) with the complementary locking portion (46 to 50) of the adjacent module, the moving parts of each module including a length of shaft (11, 24, 87, 95) extending parallel to the geometrical axis of the line and provided at its end with complementary portions (28, 29) of a coupling device (27) which is put into operation or taken out of operation by being moved in translation parallel to said geometrical axis, with the length of shaft (11) in the initial module of the line being coupled to a rotary drive device (13 to 16),
characterized in that the initial length of shaft (11) in the driving module (1) co-operates with a controlling automatic indexing device (30) for stopping all of the moving parts of the module under consideration in a predetermined position of its cycle to which corresponds an indexing angular position of said length of shaft,
and in that each of the following lengths of shaft (24, 87, 95 ...) of the driven modules (2, 3, 4...) co-operates with a controlled indexing device (31) receiving the indexing command from the controlling indexing device to stop said lengths of shaft in the same indexing angular position as the controlling length of shaft (11) when the moving parts of said driven modules are all stopped by the line of shaft lengths (11, 24, 85, 95...) in the same predetermined position of the cycle as the moving parts of the driving module.

2. Modular line according to claim 1, characterized in that the controlling indexing device (30) comprises firstly, a rotary portion or target which is connected to the moving parts of the initial module to rotate through one revolution when a complete cycle thereof is performed, and secondly, a stationary reader such as the reader of a shaft encoder, an electrical contact, a photoelectric cell, a proximity detector, ..., connected to the rotary drive device (13 to 16) and to the controlled indexing devices (31) to stop them.

3. Modular line according to claim 2, characterized in that the controlled indexing device (31) includes a disk (36) secured to the corresponding length of shaft (11, 24, 87, 95) and having a notch (37) suitable for co-operating with a moving finger (38) moved by an actuator (39) connected to the rear of the controlling indexing device (30).

4. Modular line according to any one of claims 1 to 3, characterized in that each of the lengths of shaft (11, 24, 87, 95) is connected by a device having at least one cog belt (8, 21) to said rotary members that perform the function of the corresponding module.

5. Modular line according to claim 4, characterized in that at least one cog belt (8; 21) connects each one of the lengths of shaft (11, 24, 87, 95) to a transmission box (12; 25, 26) coupled to said rotary members that perform the function of the corresponding module.

6. Modular line according to any one of claims 1 to 5, characterized in that at least one cog belt (96) interconnects said rotary members that perform the function of the corresponding module.

7. Modular line according to any one of claims 1 to 3, characterized in that:
- at least one of the coupling devices is an Oldham coupling (27) comprising two end plates (51, 52) and an intermediate plate (53), with coupling being achieved therebetween by two complementary diametrical sets of a tongue (56, 64) and a groove (5, 63) which are mutually orthogonal,
- and in that the intermediate plate (53) is held axially prisoner (58) at the free end of the length of shaft (11) on which one (51) of the end plates is mounted, is free to move (57) radially in all directions relative to said end, and is resiliently centered (59) thereon.

8. Modular line according to claim 6, characterized in that the intermediate plate (53) is resiliently centered on the free end of the corresponding length of shaft (11) by means of at least three helical springs (50) received in radial holes (60) of said end and interposed between said end and plugs (61) screwed into tapped outlets (62) of said holes.

9. Modular line according to claim 7 or 8, characterized in that the intermediate plate (53) is held captive by the outer driving plate (51).

10. Modular line according to claim 9, characterized in that the intermediate plate (53) has a coupling tongue (56) engaging the driving plate (51) to which it is held captive, and defines a coupling groove (63) for engaging the driven plate (52) from which it can be moved apart.

11. Modular line according to any one of claims 1 to 3, characterized in that at least one of the coupling devices is of the type having rounded teeth (70, 71) and includes two sleeves (68, 69) with outside rounded teeth (70, 71) fixed on two adjacent lengths of shaft (11, 24) and a ring (74) having two sets of inside teeth (72, 73), one of the sets of inside teeth (72) being permanently engaged with the outside set of teeth (70) on one of the sleeves (68) to which the ring (74) is held captive in loose manner (75, 76).

12. Modular line according to claim 1, characterized in that each module includes a driving axle (40) of which one wheel (41) is guided along a channel section rail (5), while the other wheel (42) runs on a path (6), the module in question having other wheels (41, 42) mounted free to rotate about an axis (44) and at a distance from the wheels on the axle.

13. Modular line according to claim 1 characterized in that each locking device includes a hook (46) pivotally mounted on a module about a fixed axis (47) and moved by an actuator (48), the hook (46) being suitable for co-operating with a fixed finger (45) mounted on the adjacent module.

## Patentansprüche

1. Modulare Fabrikationsstraße von Verpackungen aus Karton, Holz, Kunststoff o.a., die Bearbeitungsmodule, wie ein Randanschlag-Modul (1), ein oder mehrere Druckmodule (2), ein oder mehrere Schlitz- und Nutmodule, sog. Slotter (3), ein oder mehrere Schneidemodule (4)... aufweist, wobei jedes Modul eine Kinematik für den Antrieb von Drehelementen aufweist, die deren Funktion gewährleisten, wobei jedes Modul hinsichtlich Translation (40) entlang von parallel zur geometrischen Achse der Straße verlaufenden Schienen (5, 6) geführt wird und dem ihm vorausgehenden genähert oder von ihm entfernt werden kann, wobei jedes Modul auch an seinen Enden und an jeder Seite mit zusammengehörigen Verriegelungsteilen einer Verriegelungsvorrichtung (45 bis 50) ausgestattet ist, die jeweils (45) mit dem zusammengehörigen Verriegelungsteil (46 bis 50) des benachbarten Moduls zusammenwirken können, wobei die Kinematik jedes Moduls einen Wellenabschnitt (11, 24, 87, 95) aufweist, der sich parallel zur geometrischen Achse der Straße erstreckt und an seinen Enden mit zusammengehörigen Koppelungsteilen (28, 29) einer Koppelungsvorrichtung (27) versehen ist, wobei deren Inbetrieb- oder Außerbetriebsetzen durch Translation parallel zu der geometrischen Achse vorgenommen wird und wobei der Wellenabschnitt (11) des Kopfmoduls der Straße an eine Rotationantriebsvorrichtung (13 bis 16) gekoppelt ist, dadurch gekennzeichnet, daß
der Kopfwellenabschnitt (11) des treibenden Moduls (1) mit einer automatischen Pilot-Indexierungsvorrichtung (30) zusammenwirkt, die dazu bestimmt ist, die gesamte Kinematik des jeweiligen Moduls in einer vorbestimmten Stellung seines Zyklus zu stoppen, der eine winkelmäßige Indexierungsstellung dieses Wellenabschnitts entspricht,
die folgenden Wellenabschnitte (24, 87, 95...) der getriebenen Module (2, 3, 4...) jeweils mit einer ferngesteuerten Indexierungsvorrichtung (31) zusammenwirken, die den Indexierungsbefehl von der Pilot-Indexierungsvorrichtung erhält, um die Wellenabschnitte in derselben winkelmäßigen Indexierungsstellung wie den Pilot-Weilenabschnitt (11) zu stoppen, während die Kinematiken dieser getriebenen Module alle durch den Wellenzug (11, 24, 85, 95...) in derselben vorbestimmten Stellung des Zyklus wie die Kinematik des treibenden Moduls gestoppt werden.

2. Modulare Straße nach Anspruch 1, dadurch gekennzeichnet, daß die Pilot-Indexierungsvorrichtung (30) einerseits ein drehendes Teil oder eine Platte aufweist, die mit der Kinematik des Kopfmoduls verbunden ist, um sich einmal zu drehen, wenn ein vollständiger Zyklus von diesem vollendet ist, und andererseits einen festen Leser, wie den eines Resolvers, eines elektrischen Kontakts, einer photoelektrischen Zelle, eines Näherungsschalters... aufweist, der mit der Rotationantriebsvorrichtung (13 bis 16) und den ferngesteuerten Indexierungsvorrichtungen (31) verbunden ist, um diese zu stoppen.

3. Modulare Straße nach Anspruch 2, dadurch gekennzeichnet, daß die ferngesteuerte Indexierungsvorrichtung (31) eine auf dem entsprechenden Wellenabschnitt (11, 24, 87, 95) festgekeilte Scheibe (36) hat und eine Einkerbung (37) aufweist, die mit einem beweglichen Finger (38) zusammenwirken kann, der durch einen Zylinder (39) betrieben wird, der mit dem Leser der Pilot-Indexierungsvorrichtung (30) verbunden ist.

4. Modulare Straße nach einem der Ansprüche 1 bis 3, dadurch gekennzeichnet, daß jeder der Wellenabschnitte (11, 24, 87, 95) durch eine Vorrichtung mit wenigstens einem Zahnriemen (8, 21) mit den oben genannten Rotationselementen, die die Funktion des entsprechenden Moduls gewährleisten, verbunden ist.

5. Modulare Straße nach Anspruch 4, dadurch gekennzeichnet, daß wenigstens ein Zahnriemen (8; 21) jeden der Wellenabschnitte (11, 24, 87, 95) mit einem Transmissionskasten (12; 25, 26) verbindet, der an die oben genannten Rotationselemente, die die Funktion des entsprechenden Moduls gewährleisten, gekoppelt ist.

6. Modulare Straße nach einem der Ansprüche 1 bis 5, dadurch gekennzeichnet, daß wenigstens ein Zahnriemen (96) die oben genannten Rotationselemente, die die Funktion des entsprechenden Moduls gewährleisten, untereinander verbindet.

7. Modulare Straße nach einem der Ansprüche 1 bis 3, dadurch gekennzeichnet, daß
- wenigstens eine der Koppelungsvorrichtungen eine Kreuzscheibenkupplung (27) ist, die zwei äußere Platten (51, 52) und eine Zwischenplatte (53) aufweist, zwischen denen die Ankopplung durch zwei Läufe einer Zunge (56, 64) und einer Nut (5, 63) realisiert ist, die diametral und zusammengehörig und jeweils othogonal zueinander sind,
- und die Zwischenplatte (53) axial (58) vom freien Ende des Wellenabschnitts (11), auf dem eine (51) der äußeren Platten (51) befestigt ist, eingeschlossen ist, sie radial beweglich (57) in alle Richtungen um dieses Ende befestigt ist und elastisch (59) auf diesem zentriert ist.

8. Modulare Straße nach Anspruch 7, dadurch gekennzeichnet, daß die Zwischenplatte (53) auf dem freien Ende des entsprechenden Wellenabschnitts (11) mittels wenigstens drei Schraubenfedern (50) elastisch zentriert ist, die in radialen Löchern (60) des Endes angebracht sind und zwischen diesem und Stopfen (61) liegen, die in innengewindete Öffnungen (62) der Löcher geschraubt sind.

9. Modulare Straße nach Anspruch 7 oder 8, dadurch gekennzeichnet, daß die Zwischenplatte (53) von der treibenden äußeren Platte (51) eingeschlossen ist.

10. Modulare Straße nach Anspruch 9, dadurch gekennzeichnet, daß die Zwischenplatte (53) eine Zunge (56) zum Ankoppeln an die treibende Platte (51), von der sie eingeschlossen ist, aufweist und eine Einkerbung (63) zum Ankoppeln an die getriebene Platte (52), von der sie sich entfernen kann, begrenzt.

11. Modulare Straße nach einen der Ansprüche 1 bis 3, dadurch gekennzeichnet, daß wenigstens eine der Ankopplungsvorrichtungen von der Art mit gewölbten Zahnungen (70, 71) ist und zwei Stutzen (68, 69) mit gewölbten äußeren Zahnungen (70, 71), die auf zwei benachbarten Wellenabschnitten (11, 24) befestigt sind und einen Ring (74) mit zwei inneren Zahnungen (72, 73) aufweist, wobei die eine der inneren Zahnungen (72) in ständigem Eingriff mit der äußeren Zahnung (70) eines der Stutzen (68) ist, bezüglich dem der Ring (74) eingeschlossen und frei beweglich befestigt (75, 76) ist.

12. Modulare Straße nach Anspruch 1, dadurch gekennzeichnet, daß jedes Modul eine treibende Achse (40) aufweist, wobei ein Rad (41) von dieser entlang einer profilierten U-Schiene (5) geführt ist, während das andere Rad (42) auf einer Bahn (6) rollt, wobei das jeweilige Modul andere Räder (41, 42) aufweist, die beweglich im Abstand zu denjenigen der Achse um eine Achse (44) befestigt sind.

13. Modulare Straße nach Anspruch 1, dadurch gekennzeichnet, daß jede Verriegelungsvorrichtung einen Haken (46) aufweist, der auf einem Modul um eine feste Achse (47) schwenkbar befestigt ist und durch einen Zylinder (48) betrieben wird, wobei der Haken (46) mit einem festen Zapfen (45), der auf dem angrenzenden Modul befestigt ist, zusammenwirken kann.
